# EUROPEAN PATENT APPLICATION

(11) **EP 1 526 098 A1**
(43) Date of publication of application: **27.04.2005**
(21) Application number: 04105247.3
(22) Date of filing: 22.10.2004
(51) Int. Cl.: B65G 1/10, B65G 49/06, A47B 53/02

(54) **Sliding system for frames of a storage system, movables to each other, and related storage system**

(30) Priority: 23.10.2003 IT MI20032074
(71) Applicant: OFFICINE MISTRELLO S.R.L., 35040 Ponso (IT)
(72) Inventor: Mistrello, Marco, 35040 Ponso (IT); Aldegheri, Matteo, 35045 Ospedaletto Euganeo (IT)
(74) Representative: Gervasi, Gemma, Dr.

(57) **Abstract**

A sliding system for frames of a storage system with frames movable on carriages, essentially external to the carriages (CAR), wherein a series of small wheels (RA) engage against an external retaining projection (SP).

## Description

The present invention relates to a sliding system for frames of a storage system with frames movable on carriages, and relative storage system.

In prior art there are many embodiments of storage systems with movable frames for the vertical storage of material, preferably flat articles with large dimensions, such as sheets of glass. The frames are connected rigidly to carriages which can run on parallel guides.

An important problem is to ensure that sliding of the carriages takes place even in critical conditions for balance, for example due to swaying caused by the vertical load, which can determine overturning of the frames.

A prior art solution described in EP-588394 relates to a system to prevent overturning of the frames-carrying carriages of a storage system for sheets of glass with parallel frames running along two double-T beams. The system is provided with two additional small wheels, positioned inside the carriage, eccentric with respect to the axles of the main wheels, so that they run inside the double-T beams, along the top inside flange.

Said solution causes problems of glass dust depositing on the wheels and inside the carriages, impeding movement and making cleaning difficult. Moreover, the carriage cannot be fitted on rails with different types of cross section, such as square, rectangular or flat.

Therefore, the purpose of the present invention is to solve the aforesaid problems and to disclose a sliding system for frames of a storage system with frames movable on carriages, and relative storage system, as better described in the claims, which form an integral part of the present description.

The sliding system is essentially external to the carriages, and has a series of small wheels which engage and run on an external retaining projection.

In a variant, the external projection is carried out on one side of the carriage and the small wheels are fixed to an external support parallel to the beams on which the carriages run.

In another variant, the external projection is carried out on the external support, and the small wheels are fixed on the external side of the carriage.

Further purposes and advantages of the present invention shall be more apparent from the detailed description below of an embodiment thereof, and its variants, and from the accompanying drawings provided purely by way of a non-limiting example, wherein:
- Figure 1 shows an assembly view of a storage system with movable frames;
- Figure 2 shows a sectional front view of the sliding system subject of the present invention;
- Figure 3 shows a side view;
- Figures 4, 5 and 6 show sectional front views of variants of embodiments of the sliding system.

The same numbers and the same letters of reference in the figures indicate the same components or elements.

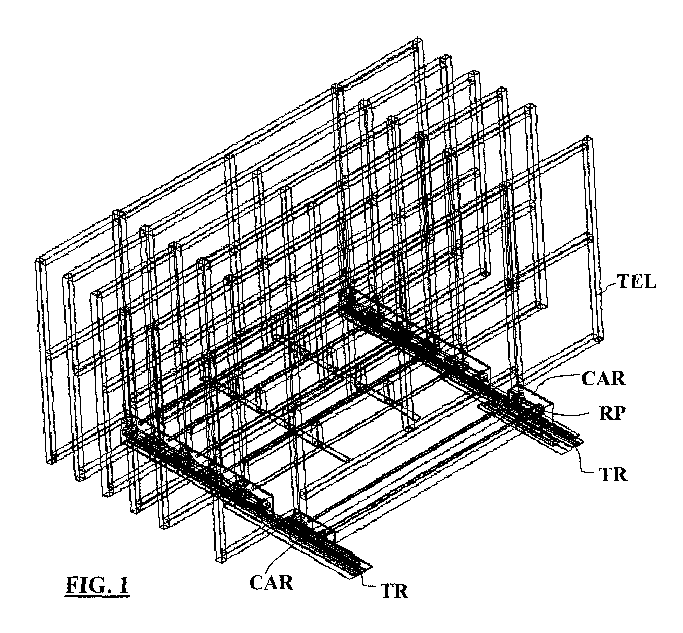

Figure 1 shows an example of storage system with parallel frames TEL running on pairs of carriages CAR along two rails, for example double-T beams TR. Preferably, each carriage comprises a pair of load-bearing wheels RP which run on a beam. The upper side of the carriage is generally used as the supporting surface of the material to be stored.

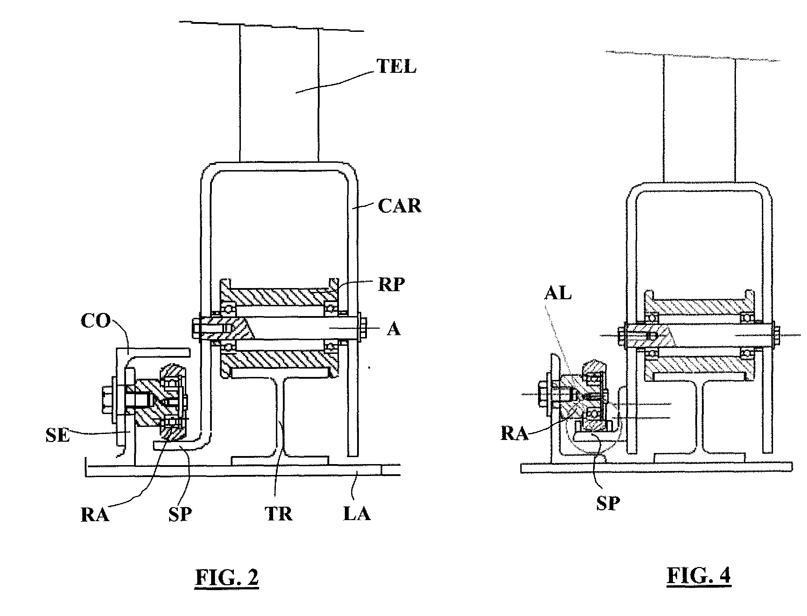

Figure 2 shows a sectional front view of the carriage CAR, on which a load-bearing wheel RP can be seen, with axle A fixed at the two sides of the carriage.

The wheel RP runs with guides on a double-T beams TR. The carriage CAR can have two or more load-bearing wheels RP.

The carriage CAR is essentially in the shape of an overturned U, which in a preferred embodiment surrounds the beams TR laterally, acting as protection against dangerous external access and as a dust guard.

Fixed on the upper side of the carriage is a frame TEL, to support the materials to be stored.

On one side of the carriage CAR there is a projection SP external to the carriage and in the shape of an L. A series of small wheels RA, fixed to and pivoting on an external support SE with an essentially vertical section, are engaged to run on top of the projection.

In a preferred embodiment, the projection SP is perpendicular to the side of the carriage, in a horizontal position. It could also be slightly tilted.

The external support SE is fixed to the floor, to the supporting surface of the beam, for example welded to a metal plate LA on which the beam TR is also supported, and extends laterally to the beam, essentially for the entire length thereof, and houses a series of small wheels RA.

Preferably, a horizontal covering CO is carried out on the external support SE, which extends over the small wheels RA. The covering can be fixed with screws, or can consist of an extension of the support SE. The purpose thereof is to protect from dangerous accidental external access and to guard the small wheels against the deposit of glass dust or other materials.

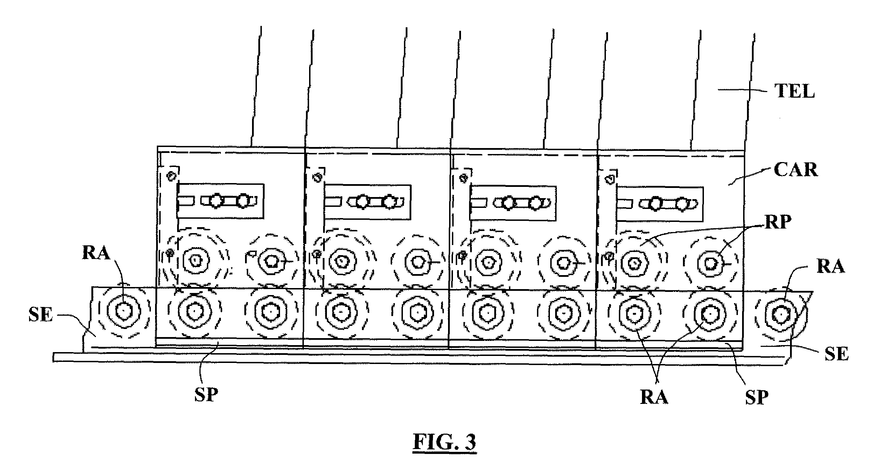

Figure 3 shows a side view of a series of carriages CAR positioned in line on a beam TR on which they can run. For each carriage CAR, the L-shaped external projection SP, two load bearing wheels RP and a frame TEL can be seen. The series of small wheels RA fixed to the external support SE are also visible. During the movement of the carriage along the beam, the load bearing wheels RP run on the beam, while the external projection SP always engages on at least two consecutive small wheels RA, which stabilize sliding of the carriage.

The distance between the small wheels RA is preferably equal to or less than the distance between the two load bearing wheels RP of a carriage.

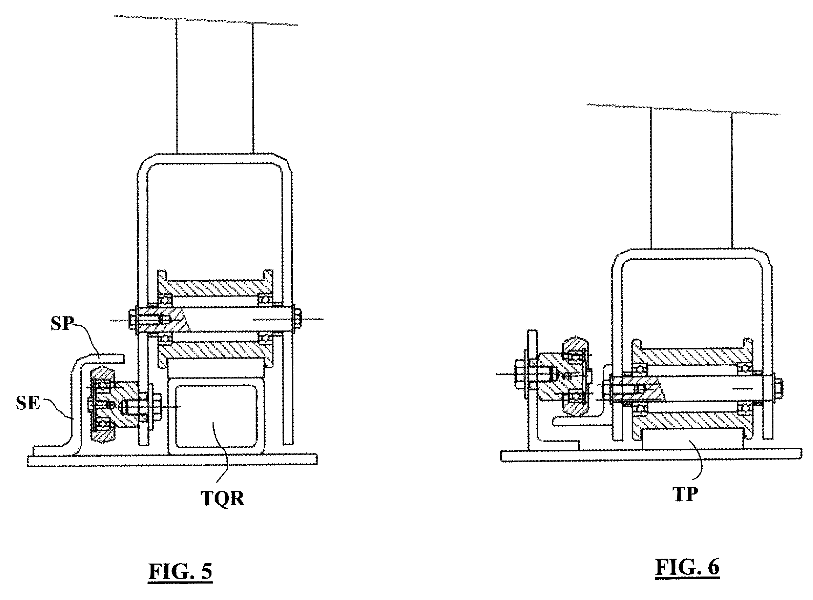

In Figure 4 the projection SP can also comprise two lateral wings AL, the purpose of which is to guide the small wheels RA, increasing the sliding stability.

Variants of embodiments of the non-limited example described are possible, without however departing from the scope of protection of the present invention, inclusive of all equivalent embodiments for those skilled in the art.

As shown in Figure 5, the small wheels RA are fixed on one side of the carriage towards the outside, and engage against the projection SP carried out on top of the external support SE. The projection SP in this case is above the small wheels RA, and also acts as horizontal covering.

The number of small wheels RA for each carriage can be any, although two are preferred.

The external support SE with relative small wheels RA and projection SP can be produced indifferently on the external or internal side of the carriage with respect to the storage system.

The carriage can be fitted on beams with a different cross section, for example a square or rectangular cross section TRQ, as shown in Figure 5, or a flat cross section TP, as shown in Figure 6.

The storage system can have frames that are not only parallel, but also with various tilt, for example a series of pairs of frames alternately tilted in opposite directions, each pair preferably fixed on the same pair of carriages.

From the description above, the advantages of the sliding system forming the object of the invention are apparent.

Its main characteristic, of being external to the carriage, solves the problems concerning deposit of dust released from the stored material or various types of debris on the wheels and inside the carriages, facilitating movement and cleaning, and allows the carriage to be fitted on rails with different types of cross section, for example a square, rectangular or flat cross section. In the case latter, the height of the carriage can be reduced to a minimum, in applications in which the total maximum height of the storage system is critical. In this case the operator operates in greater safety also in accordance with current safety regulations.

From the description above, those skilled in the art are able to produce the object of the invention without introducing further constructional details.

## Claims

1. Sliding system for a storage system with movable frames, said storage system comprising sliding carriages (CAR) for said frames provided with main wheels (RP) which run on beams (TR),
**characterized in that** said sliding system is external to the carriages, and has a number of small wheels (RA) in series which engage and run on a retaining projection (SP) external to the carriages.

2. Sliding system as claimed in claim 1, **characterized in that** said retaining projection (SP) is carried out on one side of the carriage towards the outside, and the small wheels (RA) are fixed to an external support (SE) parallel to the beams on which the carriages run.

3. Sliding system as claimed in claim 1, **characterized in that** said retaining projection (SP) is carried out on an external support (SE), and the small wheels (RA) are fixed to the external side of the carriage facing the external support.

4. Sliding system as claimed in claim 1, **characterized in that** said retaining projection (SP) is carried out on the external or internal side of the carriage with respect to the storage system.

5. Sliding system as claimed in claim 1, **characterized in that** said beams have a double-T beams, square, rectangular or flat cross section.

6. Sliding system as claimed in claim 1, **characterized in that** said retaining projection (SP) comprises two side wings (AL), for guiding the small wheels (RA).

7. Sliding system as claimed in claim 2 or 3, **characterized in that** said external support (SE) comprises a horizontal covering CO which extends over the small wheels RA.

8. Sliding system as claimed in claim 2, **characterized in that** said retaining projection (SP) is under said small wheels (RA).

9. Sliding system as claimed in claim 3, **characterized in that** said retaining projection (SP) is above said small wheels (RA).

10. Storage system with movable frames comprising a sliding system as claimed in any one of claims 1 to 9.

11. Storage system with movable frames as claimed in claim 10, **characterized in that** said frames are parallel.

12. Storage system with movable frames as claimed in claim 10, **characterized in that** said frames are tilted alternately in opposite directions.
